# EUROPÄISCHE PATENTANMELDUNG

(11) **EP 3 702 014 A1**
(43) Veröffentlichungstag der Anmeldung: **02.09.2020**
(21) Anmeldenummer: 19159946.3
(22) Anmeldetag: 28.02.2019
(51) Int. Cl.: B01D 46/10, B01D 46/52, B01D 46/00

(54) **FILTERELEMENT MIT INEINANDER EINTAUCHENDEN FALTENBÄLGEN**

(71) Anmelder: Carl Freudenberg KG, 69469 Weinheim (DE)
(72) Erfinder: SCHOLZ, Tobias, 68519 Viernheim (DE); SCHMITT, Thorsten, 69469 Weinheim (DE)

(57) **Zusammenfassung**

Die Erfindung betrifft ein Filterelement (100) zum Filtern eines Fluidstroms (L) mit einem ersten Faltenbalg (11) und mindestens einem weiteren Faltenbalg (12), wobei ein jeweiliger Faltenbalg (11, 12) durch ein mit einer Vielzahl von Falten (2) versehenes Filtermedium (1) gebildet wird,
Erfindungsgemäß wurde als vorteilhaft erkannt mehrere Faltenbälge (11, 12) eines Filterelements (100) ineinander eintauchen zu lassen.

Eine solche Ausgestaltung des Filterelements (100) hat den Vorteil, dass die Höhe des Filterelements geringer ist als die Summe der Höhen (h1+h2) der Faltenbälge.

Ein weiterer Vorteil des erfindungsgemäßen Filterelements (100) besteht darin, dass die Größe der Filterflächen von erstem Faltenbalg und mindestens einem weiteren Faltenbalg unabhängig voneinander gestaltet werden können.

## Beschreibung

Die Erfindung betrifft ein Filterelement gemäß dem Oberbegriff von Anspruch 1.

### Stand der Technik

Aus dem Stand der Technik sind zahlreiche Filter bekannt, welche eine Partikelfiltration und eine Geruchsfiltration bzw. Gasadsorption von Fluidströmen, insbesondere von Luftströmen realisieren.

Die EP 3 015 155 A1 zeigt einen mehrlagigen Filter. Der Filter weist zwei partikelfilternde Vliesstofflagen und eine dazwischenliegende gasadsorbierende Aktivkohleschicht auf.

Die EP 2 684 591 A1 zeigt einen mehrstufigen Filter. Das Innenraumluftfilterelement umfasst eine anströmseitige Vorfilterlage zur Abscheidung von Stäuben, eine Adsorptionsfilterlage, umfassend Aktivkohle, zur Abscheidung von Gasen und eine Feinfilterlage zur Abscheidung von Aerosolen, und eine umlaufende Dichtung zur Trennung der Rohgasseite von der Reingasseite beim Einbau in ein Filtergehäuse. Die Filterlagen sind übereinander angeordnet, also in Reihe zueinander geschaltet und mit einem Seitenband verbunden.

Die Schwierigkeit bei mehrlagigen Filtern besteht darin, dass die Filterflächen aller Lagen gleich groß sind. Jedoch wäre für die Partikelfiltration häufig eine größere Filterfläche als für die Geruchsfiltration bzw. Gasadsorption von Vorteil.

Die Schwierigkeit bei mehrstufigen Filtern besteht darin, ausreichend Filterfläche in dem zur Verfügung stehenden Bauraum unterzubringen. Insbesondere ist für die Partikelfiltration häufig eine größere Filterfläche erforderlich als für die Geruchsfiltration bzw. Gasadsorption.

### Aufgabenstellung

Aufgabe der vorliegenden Erfindung ist es ein Filterelement zu schaffen, bei welchem die Größe der Filterflächen bei vorgegebenem Bauraum für eine bestimmte Filtrationsaufgabe optimiert sind. Weitere Aufgabe ist es, ein Filterelement zu schaffen, bei welchem die für die Partikelfiltration zur Verfügung stehende Filterfläche größer ist als die für die Geruchsfiltration bzw. Gasadsorption zur Verfügung stehende Filterfläche.

### Technische Lösung

Gelöst wird diese Aufgabe durch ein Filterelement mit den Merkmalen von Anspruch 1.

Erfindungsgemäß wurde als vorteilhaft erkannt mehrere Faltenbälge eines Filterelements ineinander eintauchen zu lassen.

Das erfindungsgemäße Filterelement dient dem Filtern eines Fluidstroms, insbesondere eines Luftstroms. Es besitzt einen ersten Faltenbalg und mindestens einen weiteren Faltenbalg, wobei ein jeweiliger Faltenbalg durch ein Filtermedium gebildet wird, welches mit einer Vielzahl von Falten versehen ist. Zwischen je zwei benachbarten Faltkanten des jeweiligen Faltenbalgs liegen Faltflächen vor, welche auch als Faltabschnitte bezeichnet werden können. Die Summe aller Faltflächen bildet eine Filterfläche des Filtermediums. Die Entfernung zwischen zwei benachbarten Faltkanten, welche durch einen Faltabschnitt voneinander getrennt werden, wird nachfolgend als Faltenhöhe bezeichnet. Eine jeweilige Faltkante des Faltenbalgs bildet entweder einen Faltenberg oder ein Faltental aus. Ein jeweiliger Faltenbalg weist eine Oberkante und eine Unterkante auf, wobei der Abstand zwischen der Oberkante und der Unterkante des Faltenbalgs durch die Höhe des Faltenbalgs beschrieben wird, welches somit auch dem Höhenunterschied zwischen höchstem Faltenberg und tiefstem Faltental entspricht. In vorteilhafter Weise sind der erste Faltenbalg und der mindestens eine weitere Faltenbalg so angeordnet, dass der mindestens eine weitere Faltenbalg in den ersten Faltenbalg eintaucht. Die Anordnung ist dabei derart, dass die Unterkante des mindestens einen weiteren Faltenbalgs tiefer liegt als die Oberkante des ersten Faltenbalgs.
Eine solche Ausgestaltung des Filterelements hat den Vorteil, dass die Höhe des Filterelements geringer ist als die Summe der Höhen der Faltenbälge. Es wird also ein Filterelement geschaffen, dessen Bauraumbedarf im Vergleich zu der üblichen Anordnung von Faltenbälgen in mehrstufigen Filtern bezüglich der Höhe geringer ausfällt. Ein weiterer Vorteil des erfindungsgemäßen Filterelements besteht darin, dass die Größe der Filterflächen von erstem Faltenbalg und mindestens einem weiteren Faltenbalg unabhängig voneinander gestaltet werden können. Eben weil der mindestens eine weitere Faltenbalg in den ersten Faltenbalg eintaucht, kann dieser eine größere Anzahl von Faltkanten und Faltflächen und damit auch eine größere Filterfläche aufweisen. Dient beispielsweise der erste Faltenbalg der Geruchsfiltration bzw. Gasadsorption und der mindestens eine weitere Faltenbalg der Partikelfiltration, so kann die zur Partikelfiltration zur Verfügung stehende Filterfläche größer ausgeführt werden.

In einer vorteilhaften Ausführungsvariante des erfindungsgemäßen Filterelements sind die Faltflächen von dem ersten Faltenbalg und dem mindestens einen weiteren Faltenbalg beabstandet zueinander angeordnet, d.h. sie berühren sich nicht.

Überraschend wurde festgestellt, dass bei einem derartigen Filterelement dank der größeren Filterfläche nicht nur der Abscheidegrad gegenüber zu filternden Partikeln, wie beispielsweise Feinstaub, gesteigert werden kann, sondern gleichzeitig auch der Druckverlust des Filterelements reduziert werden kann. Die Erfindung umfasst auch Filterelemente, welche neben dem ersten Faltenbalg und dem mindestens einen weiteren Faltenbalg einen dritten Faltenbalg aufweisen, wobei der dritte Faltenbalg in den weiteren Faltenbalg eintaucht.

In einer ersten Ausführungsvariante des erfindungsgemäßen Filterelements sind die Faltenhöhen eines jeweiligen Faltenbalgs einheitlich. Ein solcher Faltenbalg kann in den bekannten Plissierverfahren besonders einfach und kostengünstig gefertigt werden.
In alternativer Ausgestaltung sind bei dem mindestens einen weiteren Faltenbalg die Faltenhöhen uneinheitlich. Dadurch wird ermöglicht, dass der mindestens eine weitere Faltenbalg tiefer in den ersten Faltenbalg eintauchen kann. In vorteilhafter Weise kann so die Gesamthöhe des Filterelements besonders gering gehalten werden.

Der erste Faltenbalg und der mindestens eine weitere Faltenbalg können unterschiedliche Falthöhen aufweisen. Dies ist besonders vorteilhaft und daher bevorzugt, da so unterschiedliche Filterflächen von erstem Faltenbalg und mindestens einem weiteren Faltenbalg realisiert werden können.

In vorteilhafter Ausgestaltung des Filterelements weisen die Faltenbälge unterschiedliche Höhen auf. Dadurch kann die zur Verfügung stehende Filterfläche eines jeweiligen Faltenbalgs freier gestaltet werden.

In einer vorteilhaften Ausgestaltung des Filterelements liegen Faltentäler des mindestens einen weiteren Faltenbalgs zwischen je zwei Faltflächen des ersten Faltenbalgs. In einem Sonderfall dieser Ausführungsform liegen alle Faltentäler des mindestens einen weiteren Faltenbalgs zwischen je zwei Faltflächen des ersten Faltenbalgs.

In einer besonders vorteilhaften und daher bevorzugten Weiterbildung des erfindungsgemäßen Filterelements ist an mindestens einer Seitenfläche des Filterelements ein Kantenband vorgesehen, mit welchem der erste Faltenbalg und der mindestens eine weitere Faltenbalg jeweils stoffschlüssig verbunden sind. D.h. das Kantenband ist an dem ersten Faltenbalg und dem mindestens eine weitere Faltenbalg angebracht. Unter einem Kantenband wird hier auch ein Kantenstreifen, also ein stabilisierendes flächiges Element verstanden. Die Seitenfläche des Filterelements meint diejenige Seite, welche sich nicht in Richtung der Faltkanten erstreckt und angrenzend an die zickzack förmigen Kanten des Filtermediums, also jeweils am Ende der Faltkanten liegt. Die stoffschlüssige Verbindung kann insbesondere durch eine Verklebung realisiert sein, zum Beispiel unter Verwendung eines heißschmelzenden Klebemittels.

In Weiterbildung kann auch an mindestens ein Kantenband ein streifenförmiges Eingriffselement aufgebracht sein zum Eingreifen in die Faltenbälge, welches mit seinen unteren Kanten zumindest teilweise auf den Faltflächen des ersten Faltenbalgs und mit seinen oberen Kanten an den Faltentälern des mindestens einen weiteren Faltenbalgs anliegt. Das Eingriffselement kann insbesondere doppelkammförmig ausgebildet sein, mit einem ersten zahnförmigen Kamm an seiner unteren Kante, welcher dem ersten Faltenbalg zugewandt und zugeordnet ist und mit einem weiteren zahnförmigen Kamm an seiner oberen Kante, welcher dem weiteren Faltenbalg zugewandt und zugeordnet ist. Die Positionierung von erstem Faltenbalg und weiterem Faltenbalg zueinander wird so in vorteilhafter Weise festgelegt und ungewollte Berührungen der Faltflächen werden verhindert.

Der erste Faltenbalg und der mindestens eine weitere Faltenbalg des vorstehend beschriebenen Filterelements können aus unterschiedlichen Filtermedien gebildet werden. So kann in vorteilhafter Weise die Filtrationsleistung des Filterelements besonders gut an die Erfordernisse angepasst und auf den Einsatzzweck des Filterelements abgestimmt werden. Das Filtermedium zumindest eines Faltenbalgs kann eine Partikelfiltrationsschicht aus Vliesstoff aufweisen.

Das Filtermedium zumindest eines Faltenbalgs kann mindestens eine Adsorptionsschicht aufweisen, zum Beispiel aufweisend Aktivkohle.

Das Filtermedium zumindest eines Faltenbalgs kann mindestens eine imprägnierte Filtrationsschicht aufweisen.

Die Erfindung betrifft auch die Verwendung einer solchen Filteranordnung in einem Kfz, beispielsweise in einem Nfz oder einem PKW, zur Innenraumluftfiltration. Die Filteranordnung kann sowohl im Umluftbetrieb wie auch im Frischluftbetrieb verwendet werden.

Die Erfindung betrifft alternativ die Verwendung einer solchen Filteranordnung in einem Raumluftreiniger, wie er in Wohnräumen eingesetzt wird.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1a: eine seitliche Ansicht eines Faltenbalgs
- Fig. 1b: eine Draufsicht auf einen Faltenbalg
- Fig. 2a: eine erste Ausführung eines Filterelements
- Fig. 2b: eine weitere Ausführung eines Filterelements
- Fig. 3: eine weitere Ausführung eines Filterelements
- Fig. 4 a-b: eine weitere Ausführung eines Filterelements
- Fig. 5: eine Ausschnittsdarstellung einer Draufsicht auf ein Filterelement mit Filteraufnahme

Bei dem erfindungsgemäßen Filterelement 100 zum Filtern eines Fluidstroms L mit einem ersten Faltenbalg 11 und mindestens einem weiteren Faltenbalg 12 taucht der mindestens eine weitere Faltenbalg 12 in den ersten Faltenbalg 11 ein.

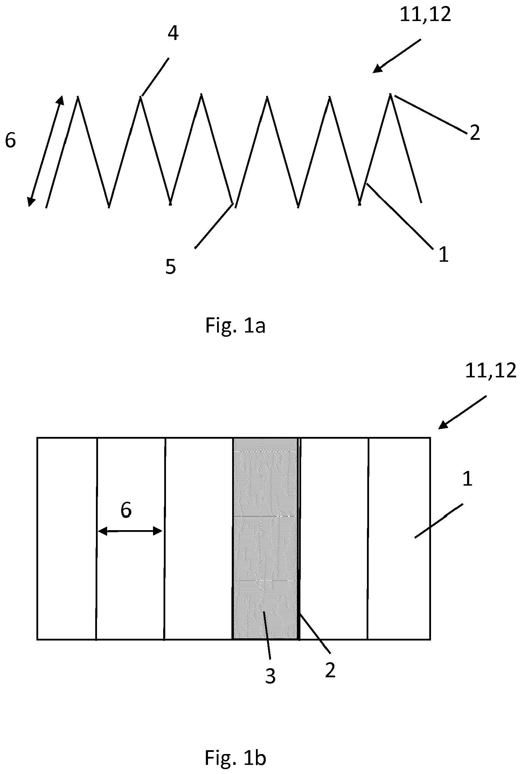

Zum besseren Verständnis des Aufbaus von Faltenbälgen 11, 12 und zu Ihren Maßen ist in den Figuren 1a und 1b jeweils ein Faltenbalg 11, 12 in einer Ansicht bzw. in einer Draufsicht dargestellt. In der Ansicht von Fig. 1a ist zu erkennen, dass ein Filtermedium 1 mit Faltkanten 2 versehen ist und somit einen Faltenbalg 11, 12 ausbildet. Eine jeweilige Faltkante 2 bildet dabei entweder einen Faltenberg 4 oder ein Faltental 5 aus. Der Abstand zwischen zwei Faltkanten 2 und somit auch der Abstand zwischen einem Faltenberg 4 und einem Faltental 5 wird als Faltenhöhe 6 bezeichnet und ist mit einem Doppelpfeil gekennzeichnet. Bei der Fläche, welche zwischen zwei Faltkanten 2 liegt, handelt es sich um die Faltfläche 3, welche auch als Faltabschnitt bezeichnet werden kann. Eine Faltfläche 3 ist in Fig. 1b zur Verdeutlichung grau hinterlegt.

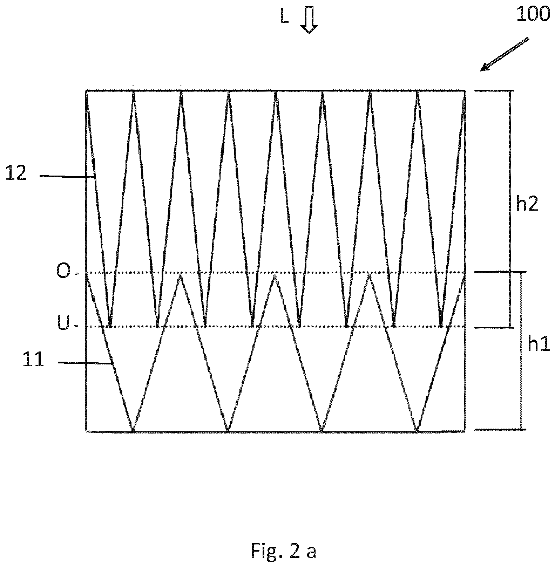

In Fig. 2a ist eine erste Ausführungsvariante des erfindungsgemäßen Filterelements 100 dargestellt. Das Filterelement 100 besitzt einen ersten Faltenbalg 11 und einen zweiten Faltenbalg 12, welche von einem Fluidstrom L, hier von einem Luftstrom, durchströmt werden. Die Durchströmungsrichtung des Fluidstroms L ist durch einen Pfeil angegeben. Der zweite, weitere Faltenbalg 12 taucht in den ersten Faltenbalg 11 ein, und zwar derart, dass die Unterkante U des weiteren Faltenbalgs 12 tiefer liegt als die Oberkante O des ersten Faltenbalgs. Damit wird zum einen erreicht, dass die Gesamthöhe des Filterelements 100 geringer ist als die Summe aus der Höhe H1 des ersten Faltenbalgs 11 und der Höhe H2 des weiteren Faltenbalgs 12. Beträgt die Höhe H1 beispielsweise 20 mm und die Höhe H2 beispielsweise 30 mm, so ergibt sich keine Gesamthöhe von 50 mm sondern eine geringere Gesamthöhe des Filterelements 100 von nur 45 mm.

In dem dargestellten Ausführungsbeispiel liegen zwei Faltentäler des weiteren Faltenbalgs 12 zwischen je zwei Faltflächen 3 des ersten Faltenbalgs 11. D.h., der weitere Faltenbalg 12 besitzt eine engere Faltung als der erste Faltenbalg 11 und somit eine größere Filtrationsfläche.

Das Filtermedium 1 des ersten Faltenbalgs 11 kann eine Adsorptionsschicht besitzen, beispielsweise aufweisend Aktivkohle, sodass durch den ersten Faltenbalg 11 eine Aktivkohlefilterlage gebildet wird. Das Filtermedium 1 des weiteren Faltenbalgs 12 kann eine Partikelfiltrationsschicht aus Vliesstoff besitzen, sodass der weitere Faltenbalg 12 eine Partikelfilterlage ausbildet.

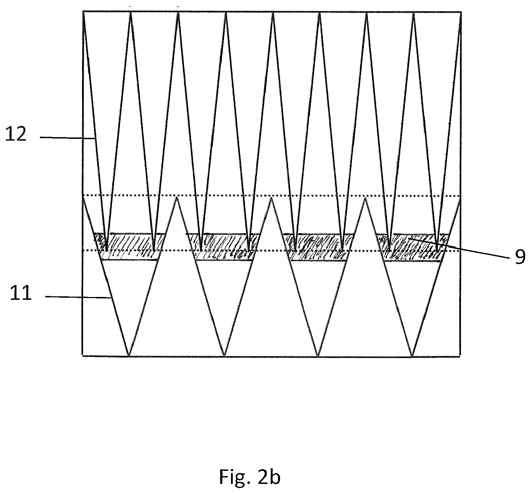

In Fig. 2b ist ein Filterelement 100 von gleichem Aufbau dargestellt. Zusätzlich ist ein Eingriffselement 9 vorgesehen. Das Eingriffselement 9 ist doppelkammförmig ausgebildet und liegt mit seinem ersten zahnförmigen Kamm an seiner unteren Kante an den Faltflächen 3 des ersten Faltenbalgs 11 an. Mit seinem weiteren zahnförmigen Kamm an seiner oberen Kante liegt das Eingriffselement 9 an den Faltentälern 5 des weiteren Faltenbalgs 12 an. Damit bewirkt das Eingriffselement, dass die Positionierung von erstem Faltenbalg 11 und weiterem Faltenbalg 12 zueinander festgelegt wird und ungewollte Verschiebungen von erstem Faltenbalg 11 und weiterem Faltenbalg 12 relativ zueinander verhindert werden. Das Eingriffselement 9 kann daher auch als Abstandshalter bezeichnet werden.

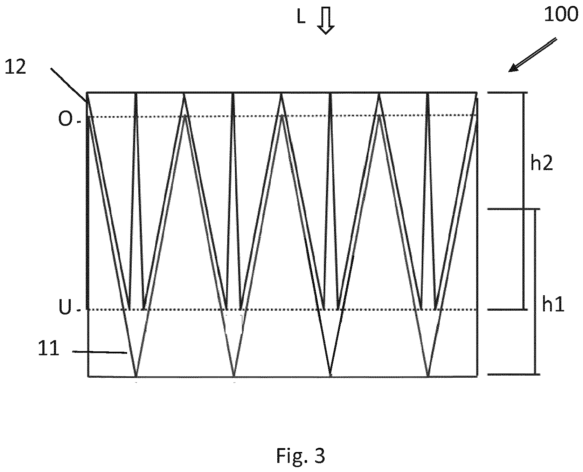

Während die Ausführungsbeispiele der Figuren 2a und 2b jeweils gleichmäßige Falten besitzen, d.h. die Faltenhöhen eines jeweiligen Faltenbalgs 11, 12 jeweils einheitlich sind, zeigt das Ausführungsbeispiel gemäß Fig. 3 unregelmäßige Falten. Zwar sind auch die Faltenhöhen 6 des ersten Faltenbalgs 11 einheitlich. Die Faltenhöhen 6 des weiteren Faltenbalgs 12 jedoch alternieren. Dadurch wird ermöglicht, dass der weitere Faltenbalg 12 tiefer in den ersten Faltenbalg 11 eintauchen kann. Damit kann die Gesamthöhe des Filterelements 100 weiter reduziert werden. Beträgt die Höhe H1 des ersten Faltenbalgs 11 beispielsweise 30 mm und die Höhe H 2 des weiteren Faltenbalgs 12 beispielsweise 25 mm so ist eine Gesamthöhe von 35 mm möglich, welche deutlich unter der Summe der beiden Einzelhöhen H1 + H2 von 55 mm liegt. Auch in diesem Beispiel kann der erste Faltenbalg 11 eine Aktivkohlefilterlage und der weitere Faltenbalg 12 eine Partikelfilterlage ausbilden.

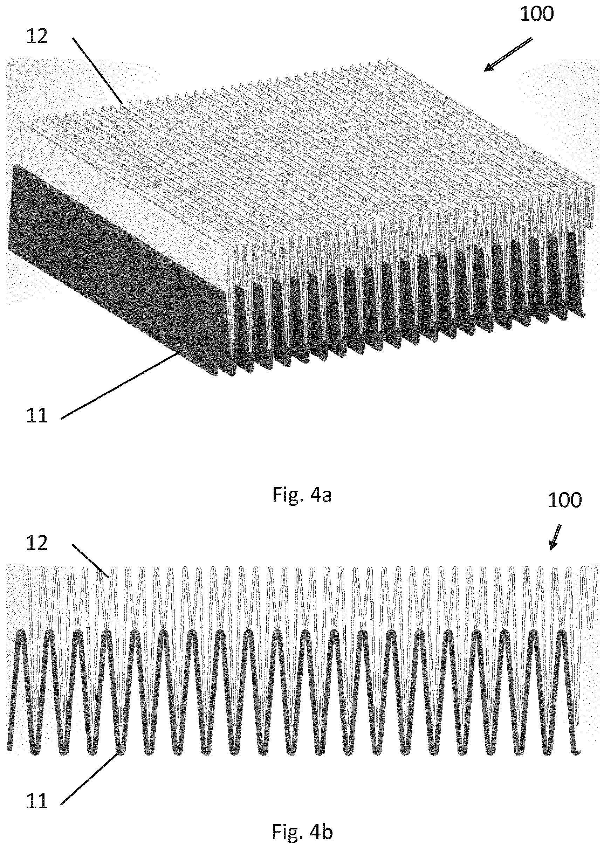

Auch in dem Ausführungsbeispiel gemäß den Figuren 4a und 4b besitzt der weitere Faltenbalg 12 keine einheitlichen Faltenhöhen 6 sondern alternierende Faltenhöhen 6. Damit wird ermöglicht, dass abwechselnd ein Faltental 5 des weiteren Faltenbalgs 12 zwischen zwei Faltflächen 3 des ersten Faltenbalgs 11 eintaucht und das nächste Faltental 5 des weiteren Faltenbalgs 12 auf dem Faltenberg 4 des ersten Faltenbalgs aufliegt. Auch in dieser Ausführungsform ergibt sich eine geringere Gesamthöhe des Filterelements 100 als die Summe aus der Höhe H1 des ersten Faltenbalgs 11 und der Höhe H2 des weiteren Faltenbalgs 12. Genauso kann - wie bereits bei dem zuvor beschriebenen Ausführungsbeispielen - die Filtrationsfläche des weiteren Faltenbalgs 12 größer ausgestaltet werden als die Filtrationsfläche des ersten Faltenbalgs 11. Besonders wenn der weitere Faltenbalg 12 eine Partikelfiltrationslage ausbildet ist dies vorteilhaft.

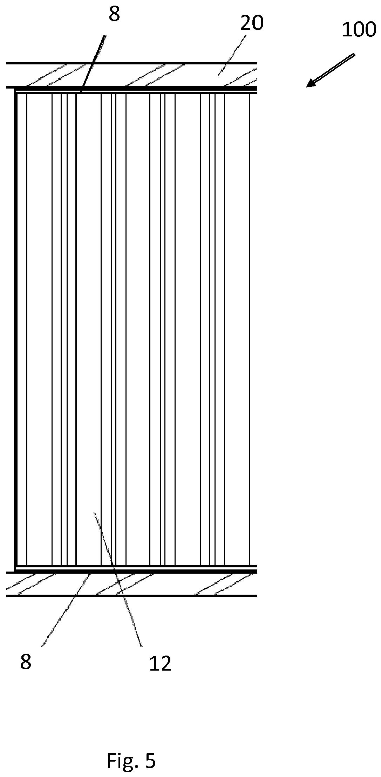

Fig. 5 zeigt einen Ausschnitt aus einer Draufsicht eines Filterelements 100. In dieser Draufsicht ist nur der weitere Faltenbalg 12 zu erkennen, nicht jedoch der erste Faltenbalg 11. Der erste Faltenbalg 11 liegt unterhalb des weiteren Faltenbalgs 12. An den beiden Seitenflächen von erstem Faltenbalg 11 und weiterem Faltenbalg 12 sind Kantenbänder 8 angebracht, beispielsweise mit den Faltenbälgen 11, 12 verklebt. Die Kantenbänder 8 haben dabei zwei Funktionen: Zum ersten werden die Faltenbälge 11, 12 stabilisiert und zum zweiten werden mögliche Bypässe zwischen den Faltenbälgen 11, 12 und einer umgebenden Filteraufnahme 20, beispielsweise einem Filterrahmen oder einem Filtergehäuse, geschlossen. Das in Fig. 2b dargestellte Eingriffselement 9 kann mit einem Kantenband 8 stoffschlüssig verbunden sein. Es ist in Fig. 5 jedoch ebenfalls nicht zu erkennen, da es sich zwischen erstem Faltenbalg 11 und weiterem Faltenbalg 12 und somit unterhalb des sichtbaren weiteren Faltenbalgs 12 befindet.

### Bezugszeichenliste

- 1: Filtermedium
- 2: Faltkante
- 3: Faltfläche
- 4: Faltenberg
- 5: Faltental
- 6: Faltenhöhe
- 7: -
- 8: Kantenband
- 9: Eingriffselement

- 11: erster Faltenbalg
- 12: weiterer Faltenbalg

- 20: Filteraufnahme

- 100: Filterelement

- h1: Höhe erster Faltenbalg
- h2: Höhe weiterer Faltenbalg

- L: Fluidstrom (Luftstrom)

- O: Oberkante 1. Faltenbalg
- U: Unterkante weiterer Faltenbalg

## Patentansprüche

1. Filterelement (100) zum Filtern eines Fluidstroms (L) mit einem ersten Faltenbalg (11) und mindestens einem weiteren Faltenbalg (12), wobei ein jeweiliger Faltenbalg (11, 12) durch ein mit einer Vielzahl von Falten (2) versehenes Filtermedium (1) gebildet wird,
**dadurch gekennzeichnet, dass**
der mindestens eine weitere Faltenbalg (12) in den ersten Faltenbalg (11) eintaucht.

2. Filterelement nach Anspruch 1
**dadurch gekennzeichnet, dass**
die Faltflächen (3) von dem ersten Faltenbalg (11) und dem mindestens einen weiteren Faltenbalg (12) beabstandet zueinander sind.

3. Filterelement nach einem der vorangehenden Ansprüche
**dadurch gekennzeichnet, dass**
die Faltenhöhen (6) eines jeweiligen Faltenbalgs (11, 12) einheitlich sind.

4. Filterelement nach einem der Ansprüche 1 bis 2
**dadurch gekennzeichnet, dass**
bei dem mindestens einem weiteren Faltenbalg (12) die Faltenhöhen (6) uneinheitlich sind.

5. Filterelement nach einem der vorangehenden Ansprüche
**dadurch gekennzeichnet, dass**
die Faltenbälge (11, 12) unterschiedliche Faltenhöhen (6) aufweisen.

6. Filterelement nach einem der vorangehenden Ansprüche
**dadurch gekennzeichnet, dass**
die Faltenbälge (11, 12) unterschiedliche Höhen (h1, h2) aufweisen.

7. Filterelement nach einem der vorangehenden Ansprüche
**dadurch gekennzeichnet, dass**
Faltentäler (5) des mindestens einen weiteren Faltenbalgs (12) zwischen je zwei Faltflächen (3) des ersten Faltenbalgs (11) liegen.

8. Filterelement nach Anspruch 7
**dadurch gekennzeichnet, dass**
alle Faltentäler (5) des mindestens einen weiteren Faltenbalgs (12) zwischen je zwei Faltflächen (3) des ersten Faltenbalgs (11) liegen.

9. Filterelement nach einem der vorangehenden Ansprüche
**dadurch gekennzeichnet, dass**
an mindestens einer Seitenfläche des Filterelements (100) ein Kantenband (8) vorgesehen ist, mit welchem der erste Faltenbalg (11) und der mindestens eine weitere Faltenbalg (12) jeweils stoffschlüssig verbunden sind.

10. Filterelement nach Anspruch 9
**dadurch gekennzeichnet, dass**
auf mindestens ein Kantenband (8) ein streifenförmiges Eingriffselement (9) aufgebracht ist, welches mit seinen unteren Kanten an den Faltflächen (3) des ersten Faltenbalgs (11) und mit seinen oberen Kanten an den Faltentälern (5) des mindestens einen weiteren Faltenbalgs (12) anliegt.

11. Filterelement nach einem der vorangehenden Ansprüche
**dadurch gekennzeichnet, dass**
der erste Faltenbalg (11) und der mindestens eine weitere Faltenbalg (12) aus unterschiedlichen Filtermedien (1) gebildet sind.

12. Filterelement nach einem der vorangehenden Ansprüche
**dadurch gekennzeichnet, dass**
das Filtermedium (1) zumindest eines Faltenbalgs (11, 12) mindestens eine Partikelfiltrationsschicht aus Vliesstoff aufweist.

13. Filterelement nach einem der vorangehenden Ansprüche
**dadurch gekennzeichnet, dass**
das Filtermedium (1) zumindest eines Faltenbalgs (11, 12) mindestens eine Adsorptionsschicht aufweist.

14. Filterelement nach einem der vorangehenden Ansprüche
**dadurch gekennzeichnet, dass**
das Filtermedium (1) zumindest eines Faltenbalgs (11, 12) mindestens eine imprägnierte Filtrationsschicht aufweist.
